# EUROPEAN PATENT SPECIFICATION

(11) **EP 1 391 048 B1**
(45) Date of publication and mention of the grant of the patent: **22.11.2006**
(21) Application number: 02766829.2
(22) Date of filing: 26.04.2002
(51) Int. Cl.: H04B 1/69, H04B 1/707

(54) **FAST JOINT DETECTION**
SCHNELLE AUSKREUZUNGSDETEKTION
DETECTION DE CONNEXIONS RAPIDES

(30) Priority: 30.04.2001 US 287431 P; 31.12.2001 US 37710
(43) Date of publication of application: 25.02.2004
(73) Proprietor: INTERDIGITAL TECHNOLOGY CORPORATION, Wilmington, DE 19801 (US)
(72) Inventor: DE, Parthaprantim, Plainview, NY 11803 (US); PAN, Jung-Lin, Selden, NY 11784 (US); ZEIRA, Ariela, Huntington, NY 11743 (US)
(74) Representative: Henningsson, Gunnar
(86) International application number: PCT/US2002/013266
(87) International publication number: WO 2002/089346

(56) References cited:
- WO-A-99/40698
- US-A- 6 144 711
- US-B1- 6 208 295
- US-B1- 6 252 540
- US-B1- 6 370 129
- BENVENUTO N ET AL: "Joint detection with low computational complexity for hybrid TD-CDMA systems" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 618-622, XP010352853 ISBN: 0-7803-5435-4
- DAS S ET AL: "Computationally efficient multiuser detectors" PERSONAL, INDOOR AND MOBILE RADIO COMMUNICATIONS, 1997. WAVES OF THE YEAR 2000. PIMRC '97., THE 8TH IEEE INTERNATIONAL SYMPOSIUM ON HELSINKI, FINLAND 1-4 SEPT. 1997, NEW YORK, NY, USA,IEEE, US, 1 September 1997 (1997-09-01), pages 62-67, XP010247507 ISBN: 0-7803-3871-5
- INKYU LEE ET AL: "A FAST COMPUTATION ALGORITHM FOR THE DECISION FEEDBACK EQUALIZER" IEEE TRANSACTIONS ON COMMUNICATIONS, IEEE INC. NEW YORK, US, vol. 43, no. 11, 1 November 1995 (1995-11-01), pages 2742-2749, XP000536298 ISSN: 0090-6778

## Description

This application claims priority to U.S. Provisional Patent Application No. 60/287,431, filed on April 30, 2001.

BACKGROUND

The invention generally relates to wireless communication systems. In particular, the invention relates to data detection in a wireless communication system.

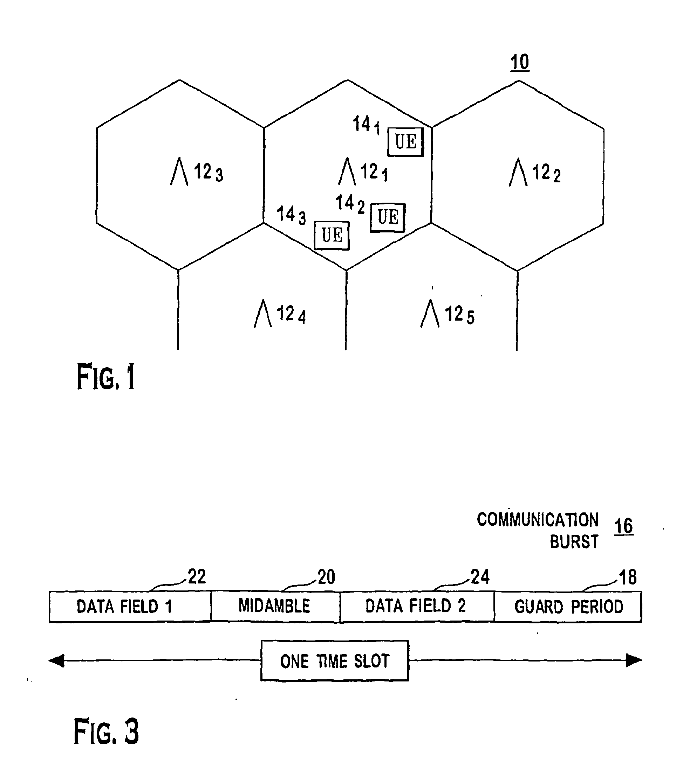

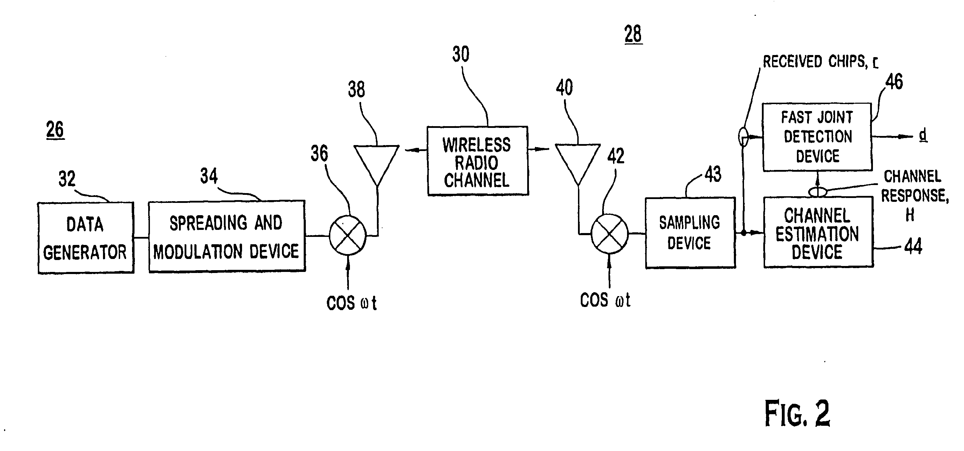

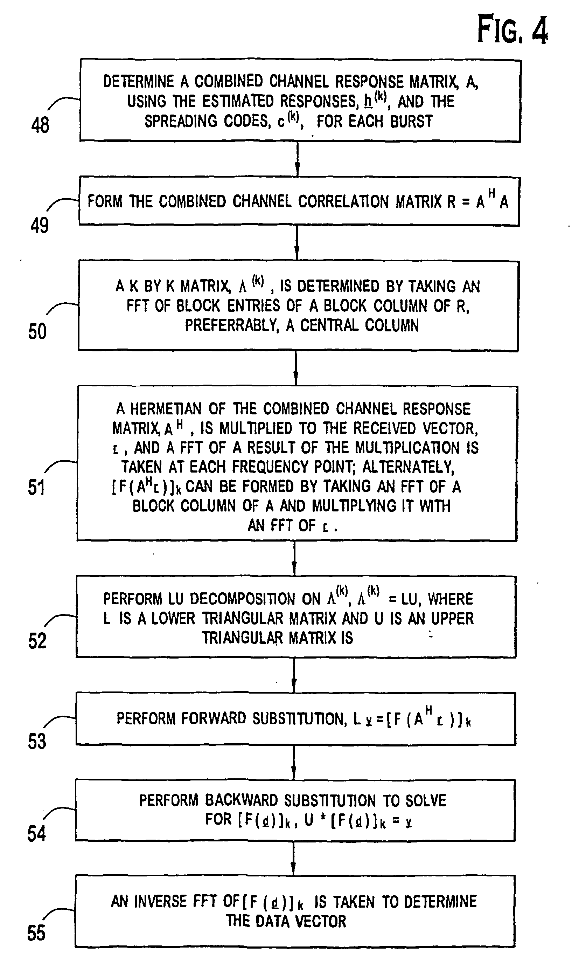

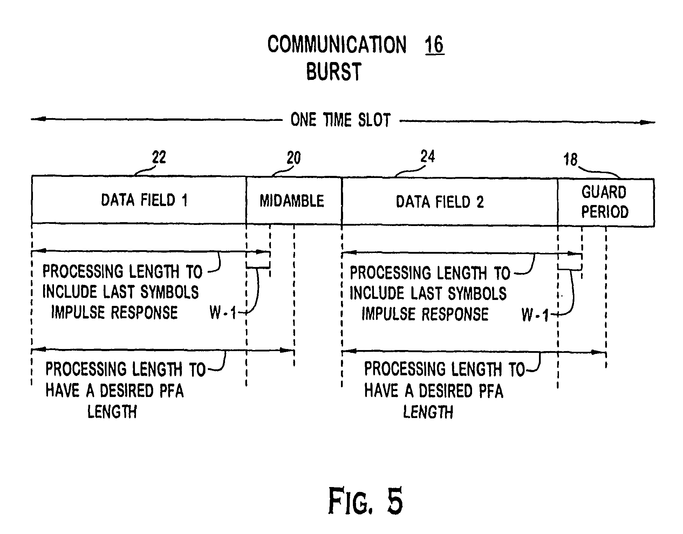

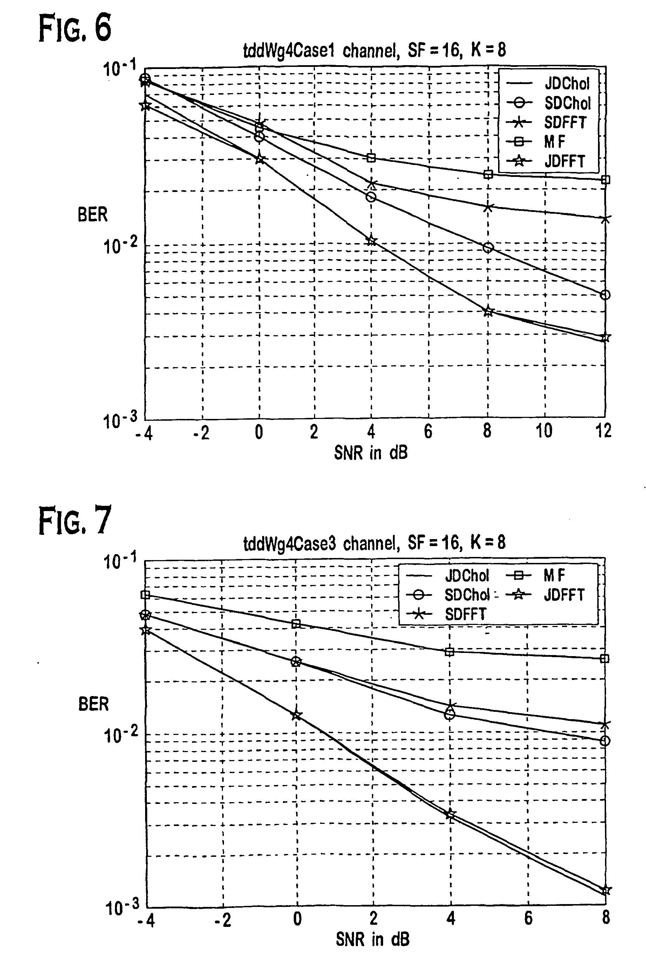

Figure 1 is an illustration of a wireless communication system 10. The communication system 10 has base stations 12₁ to 12₅ (12) which communicate with user equipments (UEs) 14₁ to 14₃ (14). Each base station 12 has an associated operational area, where it communicates with UEs 14 in its operational area.

In some communication systems, such as frequency division duplex using code division multiple access (FDD/CDMA) and time division duplex using code division multiple access (TDD/CDMA), multiple communications are sent over the same frequency spectrum. These communications are differentiated by their channelization codes. To more efficiently use the frequency spectrum, TDD/CDMA communication systems use repeating frames divided into timeslots for communication. A communication sent in such a system will have one or multiple associated codes and timeslots assigned to it.

Since multiple communications may be sent in the same frequency spectrum and at the same time, a receiver in such a system must distinguish between the multiple communications. One approach to detecting such signals is multiuser detection (MUD). In MUD, signals associated with all the UEs 14, users, are detected simultaneously. Another approach to detecting amulti-code transmission from a single transmitter is single user detection (SUD). In SUD, to recover data from the multi-code transmission at the receiver, the received signal is passed through an equalization stage and despread using one or multiple codes. Approaches for implementing MUD and the equalization stage of SUD include using a Cholesky or an approximate Cholesky decomposition. These approaches have a high complexity. The high complexity leads to increased power consumption, which at the UE 14 results in reduced battery life. Accordingly, it is desirable to have alternative approaches to detecting received data.
One alternative is disclosed for example in N. Benvenuto, G. Sostrato "Joint Detection with Low Computational Complexity for Hybrid TD-CDMA Systems", Vehicular Technology Conference 1999.

SUMMARY

K data signals are transmitted over a shared spectrum in a code division multiple access communication system. A combined signal is received and sampled over the shared spectrum. The combined signal has the K transmitted data signals. A combined channel response matrix is produced using the codes and impulse responses of the K transmitted data signals. A block column of a combined channel correlation matrix is determined using the combined channel response matrix. Each block entry of the block column is a K by K matrix. At each frequency point k, a K by K matrix Λ^{(k)} is determined by taking the fourier transform of the block entries of the block column. An inverse of Λ^{(k)} is multiplied to a result of the fourier transform. Alternately, forward and backward substitution can be used to solve the system. An inverse fourier transform is used to recover the data from the K data signals.
This is achieved by the features of the appended independent claims.

BRIEF DESCRIPTION OF THE DRAWING(S)

Figure 1 is a wireless communication system.

Figure 2 is a simplified transmitter and a fast joint detection receiver.

Figure 3 is an illustration of a communication burst.

Figure 4 is a flow chart of a preferred embodiment for fast joint detection.

Figure 5 is an illustration of a data burst indicating extended processing areas.

Figures 6-11 are graphs illustrating the simulated performance of fast joint detection to other data detection approaches.

DETAILED DESCRIPTION OF THE PREFERRED EMBODIMENT(S)

Figure 2 illustrates a simplified transmitter 26 and receiver 28 using fast joint detection in a TDD/CDMA communication system, although fast joint detection is applicable to other systems, such as FDD/CDMA. In a typical system, a transmitter 26 is in each UE 14 and multiple transmitting circuits 26 sending multiple communications are in each base station 12. The joint detection receiver 28 may be at a base station 12, UEs 14 or both.

The transmitter 26 sends data over a wireless radio channel 30. A data generator 32 in the transmitter 26 generates data to be communicated to the receiver 28. A modulation/spreading/training sequence insertion device 34 spreads the data with the appropriate code(s) and makes the spread reference data time-multiplexed with a midamble training sequence in the appropriate assigned time slot, producing a communication burst or bursts.

A typical communication burst 16 has a midamble 20, a guard period 18 and two data fields 22, 24, as shown in Figure 3. The midamble 20 separates the two data fields 22, 24 and the guard period 18 separates the communication bursts to allow for the difference in arrival times of bursts transmitted from different transmitters 26. The two data fields 22, 24 contain the communication burst's data.

The communication burst(s) are modulated by a modulator 36 to radio frequency (RF). An antenna 38 radiates the RF signal through the wireless radio channel 30 to an antenna 40 of the receiver 28. The type of modulation used for the transmitted communication can be any of those known to those skilled in the art, such as quadrature phase shift keying (QPSK) or M-ary quadrature amplitude modulation (QAM).

The antenna 40 of the receiver 28 receives various radio frequency signals. The received signals are demodulated by a demodulator 42 to produce a baseband signal. The baseband signal is sampled by a sampling device 43, such as one or multiple analog to digital converters, at the chip rate or a multiple of the chip rate of the transmitted bursts. The samples are processed, such as by a channel estimation device 44 and a fast joint detection device 46, in the time slot and with the appropriate codes assigned to the received bursts. The channel estimation device 44 uses the midamble training sequence component in the baseband samples to provide channel information, such as channel impulse responses. The channel impulse responses for all the transmitted signals can be viewed as a matrix, H. The channel information is used by the fast joint detection device 46 to estimate the transmitted data of the received communication bursts as soft symbols.

The fast joint detection device 46 uses the channel information provided by the channel estimation device 44 and the known spreading codes used by the transmitter 26 to estimate the data of the desired received communication burst(s).

Although fast joint detection is explained using the third generation partnership project (3GPP) universal terrestrial radio access (UTRA) TDD system as the underlying communication system, it is applicable to other systems. That system is a direct sequence wideband CDMA (W-CDMA) system, where the uplink and downlink transmissions are confined to mutually exclusive timeslots.

The receiver 28 receives a total of K bursts that arrive simultaneously. The K bursts are superimposed on top of each other in one observation interval. For the 3GPP UTRA TDD system, each data field of a time slot corresponds to one observation interval. A code used for a k^{th} burst is represented as C^{(k)}. The K bursts may originate from K different transmitters or for multi-code transmissions, less than K different transmitters.

Each data field of a communication burst has a predetermined number of transmitted symbols, N_{S}. Each symbol is transmitted using a predetermined number of chips, which is the spreading factor, SF. Accordingly, each data field has N_{S} x SF chips. After passing through the wireless radio channel, each symbol has an impulse response, such as of length W chips. A typical value for W is 57. As a result, each received field has a length of SF x N_{S} + W - 1 chips or N_{C} chips.

Each k^{th} field of the K data fields in one observation interval can be modeled at the receiver by Equation 1. ${{r}_{̲}}^{\left(k\right)} = {A}^{\left(k\right)} {{d}_{̲}}^{\left(k\right)} , k = 1 ⋯ K$

*r*^{(*k*)} is the received contribution of the k^{th} field. A^{(k)} is the combined channel response for the k^{th} field. A^{(k)} is a N_{C} x N_{S} matrix. Each j^{th} column in A^{(k)} is a zero-padded version of the symbol response S^{(k)} of the j^{th} element of d^{(k)}. The symbol response S^{(k)} is the convolution of the k^{th} field's estimate response, *h*^{(*k*)}, and spreading code C^{(k)} for the field. d^{(k)} is the unknown data symbols in the k^{th} data field. *h*^{(*k*)} is of length W chips and can be represented by Equation 2. ${{h}_{̲}}^{\left(k\right)} = {γ}^{\left(k\right)} ⋅ {{{h}^{˜}}_{̲}}^{\left(k\right)}$ *γ*^{(*k*)} reflects the transmitter gain and path loss. *h̃*^{(*k*)} is the channel impulse response.

For uplink communications, each *h̃*^{(*k*)} as well as each γ^{(*k*)} are distinct. For the downlink, all of the fields have the same *h̃*^{(*k*)} but each γ^{(*k*)} is different. If transmit diversity is used in the downlink, each γ^{(*k*)} and *h̃*^{(*k*)} are distinct.

The overall received vector *r* from all K fields sent over the wireless channel is per Equation 3. ${r}_{̲} = {Σ}_{k = 1}^{K} {{r}_{̲}}^{\left(k\right)} + {n}_{̲}$ n is a zero-mean noise vector.

By combining the A^{(k)} for all data fields into a total channel response matrix A and all the unknown data for each burst d^{(k)} into a total data vector d, Equation 1 becomes Equation 4. ${r}_{̲} = A {d}_{̲} + {n}_{̲}$

Determining *d* using a MMSE solution is per Equation 5. ${d}_{̲} = {R}^{- 1} \left({A}^{H}{r}_{̲}\right)$ (·)^{*H*} represents the hermetian function (complex conjugate transpose). R for a MMSE solution is per Equation 6. $R = {A}^{H} A + {σ}^{2} I$ σ² is the noise variance, typically obtained from the channel estimation device 44, and I is the identity matrix.

Using fast fourier transforms (FFTs), although other fourier transforms may be used, this equation is solved, preferably, per Equation 7. ${\left[F\left({d}_{̲}\right)\right]}_{k} = {\left[{Λ}^{\left(k\right)}\right]}^{- 1} {\left[F\left({A}^{H}{r}_{̲}\right)\right]}_{k}$ *F*(·) indicates the FFT function. The [·]_{*k*} indicate that the equation is solved at each frequency point k. Λ^{(*k*)} are block entries of size K by K of a block diagonal matrix Λ . The derivation of A is described subsequently. Instead of directly solving Equation 7, Equation 7 can be solved using forward and backward substitution.

Figure 4 is a flow chart for a preferred method of determining the data vector *d* using fast joint detection. The combined channel response matrix A is determined using the estimated responses *h*^{(*k*)} and the spreading code *c*^{(*k*)} for each burst *c*^{(*k*)}, 48. Form the combined channel correlation matrix, *R* = *A*^{*H*} *A,* 49. At each frequency point, a K by K matrix Λ^{(K)} is determined by taking the fourier transform of block entries of a block column ofR (block FFT), 50. Preferably, a central column is used, at least w columns from the left or right of the R matrix.

*F*[*A*^{*H*}*r*]_{*k*} is determined using a FFT of a matrix multiplication, 51. The inverse of each Λ^{(*k*)}, [Λ^{(*k*)}]⁻¹, is determined. To determine [*F*(*d*)]_{*k*}, [Λ^{(*k*)}]⁻¹ and [*F*(*A*^{*H*}*r*)]_{*k*} are multiplied at each frequency point. Alternately, [*F*(*d*)]_{*k*} is determined using LU decomposition. Λ^{(*k*)} is decomposed into a lower triangular matrix, L, and an upper triangular matrix, U, 52. Using forward, *Ly* = [*F*(*A*^{*H*}*r*)], 53, and backward substitution, *U*[*F*(*d*)]_{*K*} *= y*, 54, [*F*(*d*)]_{*K*} is determined. *d* is determined by an inverse FFT of *F*(*d*), 55.

The derivation of Equation 7 is as follows. A minimum mean square error solution of Equation 4 is determined per Equation 8. Although Equation 7 is a MMSE based solution, fast joint detection can be implemented using other approaches, such as a zero forcing approach. $R {d}_{̲} = \left({A}^{H}A+{σ}^{2}I\right) {d}_{̲} = {A}^{H} {r}_{̲}$ If a zero forcing solution is used, the σ²*I* term drops out of Equation 8, such as *Rd =* (*A*^{*H*}*A*)*d = A*^{*H*}*r*. The following is a derivation for the MMSE solution, although an analogous derivation can be used for a zero forcing solution. For illustrative purposes, a simplified example of R with Nₛ = 10 and W = 2 is per Equation 9. This example is readily extendable to any Nₛ and W. $R = \left[\begin{matrix}{R}_{0} & {\begin{matrix}{R}_{1}\end{matrix}}^{H} & {\begin{matrix}{R}_{2}\end{matrix}}^{H} & 0 & 0 & 0 & 0 & 0 & 0 & 0 \\ \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 & 0 & 0 & 0 \\ ⋯ & ⋯ & ⋯ & ⋯ & ⋯ & ⋯ & ⋯ & ⋯ & ⋯ & ⋯ \\ \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 & 0 & 0 \\ 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 & 0 \\ 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 \\ 0 & 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 \\ 0 & 0 & 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 \\ 0 & 0 & 0 & 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} \\ ⋯ & ⋯ & ⋯ & ⋯ & ⋯ & ⋯ & ⋯ & ⋯ & ⋯ & ⋯ \\ 0 & 0 & 0 & 0 & 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} \\ 0 & 0 & 0 & 0 & 0 & 0 & 0 & \begin{matrix}{R}_{2}\end{matrix} & \begin{matrix}{R}_{1}\end{matrix} & \begin{matrix}{R}_{0}\end{matrix}\end{matrix}\right]$

The matrix R is of size (KNₛ) by (KNₛ) in general. Each entry, *R*_{*i*}, in the R matrix is a K by K block. The sub-matrix, within the dotted lines of R, is block-circulant, i.e. a block-wise extension of a circulant matrix. The portion of R, which is not block-circulant, depends on the maximum multipath delay spread, W.

A block-circulant extension of the matrix R, R_{c}, in Equation 9 is per Equation 10. ${R}_{c} = \left[\begin{matrix}{R}_{0} & {\begin{matrix}{R}_{1}\end{matrix}}^{H} & {\begin{matrix}{R}_{2}\end{matrix}}^{H} & 0 & 0 & 0 & 0 & 0 & \begin{matrix}{R}_{2}\end{matrix} & \begin{matrix}{R}_{2}\end{matrix} \\ \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 & 0 & 0 & \begin{matrix}{R}_{2}\end{matrix} \\ ⋯ & ⋯ & ⋯ & ⋯ & ⋯ & ⋯ & ⋯ & ⋯ & ⋯ & ⋯ \\ \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 & 0 & 0 \\ 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 & 0 \\ 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 \\ 0 & 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 \\ 0 & 0 & 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 \\ 0 & 0 & 0 & 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} & {\begin{matrix}\begin{matrix}{R}_{2}\end{matrix}\end{matrix}}^{H} \\ ⋯ & ⋯ & ⋯ & ⋯ & ⋯ & ⋯ & ⋯ & ⋯ & ⋯ & ⋯ \\ {\begin{matrix}\begin{matrix}{R}_{2}\end{matrix}\end{matrix}}^{H} & 0 & 0 & 0 & 0 & 0 & \begin{matrix}{R}_{2}\end{matrix} & \begin{matrix}{R}_{1}\end{matrix} & \begin{matrix}{R}_{0}\end{matrix} & {\begin{matrix}\begin{matrix}{R}_{1}\end{matrix}\end{matrix}}^{H} \\ {\begin{matrix}\begin{matrix}{R}_{1}\end{matrix}\end{matrix}}^{H} & {\begin{matrix}\begin{matrix}{R}_{2}\end{matrix}\end{matrix}}^{H} & 0 & 0 & 0 & 0 & 0 & \begin{matrix}{R}_{2}\end{matrix} & \begin{matrix}{R}_{1}\end{matrix} & \begin{matrix}{R}_{0}\end{matrix}\end{matrix}\right]$

A "Discrete Fourier Transform (DFT)-like" matrix D is determined such that *R*_{*c*} *= D*Λ*D*^{*H*}. One such matrix D is per Equation 11. $D = \left[\begin{matrix}I & {e}^{\frac{j 2 π}{{N}_{s}}} {I}_{K} & {e}^{\frac{j 4 π}{{N}_{s}}} {I}_{K} & ⋯ & ⋯ & {e}^{\frac{j 18 π}{{N}_{s}}} {I}_{K} \\ I & {e}^{\frac{j 4 π}{{N}_{s}}} {I}_{K} & {e}^{\frac{j 8 π}{{N}_{s}}} {I}_{K} & ⋯ & ⋯ & {e}^{\frac{j 36 π}{{N}_{s}}} {I}_{K} \\ ⋮ & ⋮ & ⋮ & & & ⋮ \\ I & {e}^{\frac{j 18 π}{{N}_{s}}} {I}_{K} & {e}^{\frac{j 36 π}{{N}_{s}}} {I}_{K} & ⋯ & ⋯ & {e}^{\frac{j 162 π}{{N}_{s}}} {I}_{K} \\ I & {e}^{\frac{j 20 π}{{N}_{s}}} {I}_{K} & {e}^{\frac{j 40 π}{{N}_{s}}} {I}_{K} & ⋯ & ⋯ & {e}^{\frac{j 180 π}{{N}_{s}}} {I}_{K}\end{matrix}\right]$ *I*_{*K*} is a K by K identity matrix.

The product D^{*H*} *D* is per Equation 12. ${D}^{H} D = {N}_{s} {I}_{K {N}_{s}}$ *I*_{*KN*_{*s*}} is a KNₛ by KNₛ identity matrix. The block circulant matrix R_{c} is multiplied by the D matrix, such as per Equation 13. ${R}_{c} D = \left[\begin{matrix}\left({R}_{0}+{{R}_{1}}^{H}+{{R}_{2}}^{H}+{R}_{1}+{R}_{2}\right) & ⋮ & \left(\begin{matrix}{R}_{0} {e}^{\frac{j 2 π}{{N}_{s}}} + {{R}_{1}}^{H} {e}^{\frac{j 4 π}{{N}_{s}}} + {{R}_{2}}^{H} {e}^{\frac{j 6 π}{{N}_{s}}} + {R}_{2} {e}^{\frac{j 18 π}{{N}_{s}}} + {R}_{1} {e}^{\frac{j 20 π}{{N}_{s}}}\end{matrix}\right) & ⋮ & ⋯ & \left({R}_{0}{e}^{\frac{j 18 π}{{N}_{s}}}+{{R}_{1}}^{H}{e}^{\frac{j 36 π}{{N}_{s}}}+{{R}_{2}}^{H}{e}^{\frac{j 54 π}{{N}_{s}}}+{R}_{2}{e}^{\frac{j 162 π}{{N}_{s}}}+{R}_{1}{e}^{\frac{j 180 π}{{N}_{s}}}\right) \\ \left({R}_{0}+{{R}_{1}}^{H}+{{R}_{2}}^{H}+{R}_{1}+{R}_{2}\right) & ⋮ & \left({R}_{1}{e}^{\frac{j 2 π}{{N}_{s}}}+{R}_{0}{e}^{\frac{j 4 π}{{N}_{s}}}+{{R}_{1}}^{H}{e}^{\frac{j 6 π}{{N}_{s}}}+{{R}_{2}}^{H}{e}^{\frac{j 8 π}{{N}_{s}}}+{R}_{2}{e}^{\frac{j 20 π}{{N}_{s}}}\right) & ⋮ & ⋯ & \left(\begin{matrix}{R}_{1} {e}^{\frac{j 18 π}{{N}_{s}}} + {R}_{0} {e}^{\frac{j 36 π}{{N}_{s}}} + {{R}_{1}}^{H} {e}^{\frac{j 54 π}{{N}_{s}}} + {{R}_{2}}^{H} {e}^{\frac{j 72 π}{{N}_{s}}} + {R}_{2} \frac{j 180 π}{{N}_{s}}\end{matrix}\right) \\ ⋮ & & ⋮ & ⋮ & & ⋮ \\ \left({R}_{0}+{{R}_{1}}^{H}+{{R}_{2}}^{H}+{R}_{1}+{R}_{2}\right) & ⋮ & \left({R}_{2}{e}^{\frac{j 12 π}{{N}_{s}}}+{R}_{1}{e}^{\frac{j 14 π}{{N}_{s}}}+{R}_{0}{e}^{\frac{j 16 π}{{N}_{s}}}+{{R}_{1}}^{H}{e}^{\frac{j 18 π}{{N}_{s}}}+{{R}_{2}}^{H}{e}^{\frac{j 20 π}{{N}_{s}}}\right) & ⋮ & ⋯ & \left({R}_{0}{e}^{\frac{j 108 π}{{N}_{s}}}+{{R}_{1}}^{H}{e}^{\frac{j 126 π}{{N}_{s}}}+{R}_{0}{e}^{\frac{j 144 π}{{N}_{s}}}+{{R}_{1}}^{H}{e}^{\frac{j 162 π}{{N}_{s}}}+{{R}_{2}}^{H}{e}^{\frac{j 180 π}{{N}_{s}}}\right) \\ ⋮ & & ⋮ & & & ⋮\end{matrix}\right]$ Each entry of R_{c} D is a K by K block. A block-diagonal matrix Λ is per Equation 14. $Λ {{Δ}_{̲}}_{=} \left[\begin{matrix}{Λ}^{\left(1\right)} & & & & \\ & {Λ}^{\left(2\right)} & & & \\ & & {Λ}^{\left(3\right)} & & \\ & & & ⋱ & \\ & & & & {Λ}^{\left({N}_{s}\right)}\end{matrix}\right]$ is of size (KNₛ) by (KNₛ). Each entry Λ^{(*i*)} of A is per Equation 15. ${Λ}^{\left(i\right)} = \left[\begin{matrix}{\begin{matrix}{λ}_{11}\end{matrix}}^{\left(i\right)} & ⋯ & {\begin{matrix}\begin{matrix}{λ}_{1 K}\end{matrix}\end{matrix}}^{\left(i\right)} \\ ⋮ & & ⋮ \\ {\begin{matrix}\begin{matrix}\begin{matrix}{λ}_{K 1}\end{matrix}\end{matrix}\end{matrix}}^{\left(i\right)} & ⋯ & {\begin{matrix}\begin{matrix}\begin{matrix}{λ}_{KK}\end{matrix}\end{matrix}\end{matrix}}^{\left(i\right)}\end{matrix}\right]$ Λ^{(*i*)} is a K by K block and has K² non-zero entries.

The D matrix is multiplied to the A matrix, such as per Equation 16. $DA = \left[\begin{matrix}{Λ}^{\left(1\right)} & {Λ}^{\left(2\right)} {e}^{\frac{j 2 π}{{N}_{s}}} & {Λ}^{\left(3\right)} {e}^{\frac{j 4 π}{{N}_{s}}} & ⋯ & {Λ}^{\left({N}_{s}-1\right)} {e}^{\frac{j 16 π}{{N}_{s}}} & {Λ}^{\left({N}_{s}\right)} {e}^{\frac{j 18 π}{{N}_{s}}} \\ {Λ}^{\left(1\right)} & {Λ}^{\left(2\right)} {e}^{\frac{j 4 π}{{N}_{s}}} & {Λ}^{\left(3\right)} {e}^{\frac{j 8 π}{{N}_{s}}} & ⋯ & {Λ}^{\left({N}_{s}-1\right)} {e}^{\frac{j 32 π}{{N}_{s}}} & {Λ}^{\left({N}_{s}\right)} {e}^{\frac{j 36 π}{{N}_{s}}} \\ ⋮ & ⋮ & ⋮ & & ⋮ & ⋮ \\ {Λ}^{\left(1\right)} & {Λ}^{\left(2\right)} {e}^{\frac{j 14 π}{{N}_{s}}} & {Λ}^{\left(3\right)} {e}^{\frac{j 28 π}{{N}_{s}}} & & {Λ}^{\left({N}_{s}-1\right)} {e}^{\frac{j 112 π}{{N}_{s}}} & {Λ}^{\left({N}_{s}\right)} {e}^{\frac{j 126 π}{{N}_{s}}} \\ {Λ}^{\left(1\right)} & {Λ}^{\left(2\right)} {e}^{\frac{j 16 π}{{N}_{s}}} & {Λ}^{\left(3\right)} {e}^{\frac{j 32 π}{{N}_{s}}} & ⋯ & {Λ}^{\left({N}_{s}-1\right)} {e}^{\frac{j 128 π}{{N}_{s}}} & {Λ}^{\left({N}_{s}\right)} {e}^{\frac{j 144 π}{{N}_{s}}} \\ ⋮ & ⋮ & ⋮ & ⋯ & ⋮ & ⋮\end{matrix}\right]$ Each entry of *D* as shown in Equation 16 is a K by K block.

The system of equations produced by equating each row of R_{c}D with each row of *D* is consistent. Accordingly, the same set of equations by result equating any row of R_{c}D with the same row of *D*. To illustrate for Equation 13, the first row-block of R_{c}D is per Equation 17. $\left[\left({R}_{0}+{{R}_{1}}^{H}+{{R}_{2}}^{H}+{R}_{1}+{R}_{2}\right),\left({R}_{0}{e}^{\frac{j 2 π}{{N}_{s}}}+{{R}_{1}}^{H}{e}^{\frac{j 4 π}{{N}_{s}}}+{{R}_{2}}^{H}{e}^{\frac{j 6 π}{{N}_{s}}}+{R}_{2}{e}^{\frac{j 18 π}{{N}_{s}}}+{R}_{1}{e}^{\frac{j 20 π}{{N}_{s}}}\right),⋯⋯,\left({R}_{0}{e}^{\frac{j 16 π}{{N}_{s}}}+{{R}_{1}}^{H}{e}^{\frac{j 32 π}{{N}_{s}}}+{{R}_{2}}^{H}{e}^{\frac{j 48 π}{{N}_{s}}}+{R}_{2}{e}^{\frac{j 144 π}{{N}_{s}}}+{R}_{1}{e}^{\frac{j 160 π}{{N}_{s}}}\right),\left({R}_{0}{e}^{\frac{j 18 π}{{N}_{s}}}+{{R}_{1}}^{H}{e}^{\frac{j 36 π}{{N}_{s}}}+{{R}_{2}}^{H}{e}^{\frac{j 54 π}{{N}_{s}}}+{R}_{2}{e}^{\frac{j 162 π}{{N}_{s}}}+{R}_{1}{e}^{\frac{j 180 π}{{N}_{s}}}\right)\right]$

The first row-block of D is per Equation 18. $\left[{Λ}^{\left(1\right)},{Λ}^{\left(2\right)}{e}^{\frac{j 2 π}{{N}_{s}}},{Λ}^{\left(3\right)}{e}^{\frac{j 4 π}{{N}_{s}}}⋯⋯,{Λ}^{\left({N}_{s}-1\right)}{e}^{\frac{j 16 π}{{N}_{s}}},{Λ}^{\left({N}_{s}\right)}{e}^{\frac{j 18 π}{{N}_{s}}}\right]$

Equating the entries of these two rows, Equations 19 and 20 result. ${Λ}^{\left(1\right)} = \begin{matrix}\left({R}_{0}+{R}_{1}^{H}+{R}_{2}^{H}+{R}_{1}+{R}_{2}\right)\end{matrix}$ $\begin{matrix}{Λ}^{\left(2\right)} {e}^{\frac{j 2 π}{{N}_{s}}} = \left({R}_{0}{e}^{\frac{j 2 π}{{N}_{s}}}+{{R}_{1}}^{H}{e}^{\frac{j 4 π}{{N}_{s}}}+{{R}_{2}}^{H}{e}^{\frac{j 6 π}{{N}_{s}}}+{R}_{2}{e}^{\frac{j 18 π}{{N}_{s}}}+{R}_{1}{e}^{\frac{j 20 π}{{N}_{s}}}\right) \\ = {e}^{\frac{j 2 π}{{N}_{s}}} ( {R}_{0} + {R}_{1}^{H} {e}^{\frac{j 2 π}{{N}_{s}}} + {R}_{2}^{H} {e}^{\frac{j 4 π}{{N}_{s}}} + {R}_{2} {e}^{\frac{- j 4 π}{{N}_{s}}} + {R}_{1} {e}^{\frac{- j 2 π}{{N}_{s}}} )\end{matrix}$

As a result, Λ⁽²⁾ is per Equation 21. ${Λ}^{\left(2\right)} = \left({R}_{0}+{{R}_{1}}^{H}{e}^{\frac{j 2 π}{{N}_{s}}}+{{R}_{2}}^{H}{e}^{\frac{j 4 π}{{N}_{s}}}+{R}_{2}{e}^{\frac{- j 4 π}{{N}_{s}}}+{R}_{1}{e}^{\frac{- j 2 π}{{N}_{s}}}\right)$

Similarly, Λ^{(*N*_{*s*}-1)} is per Equation 22. ${Λ}^{\left({N}_{s}-1\right)} = \left({R}_{0}+{{R}_{1}}^{H}{e}^{\frac{j 2 \left({N}_{s}-2\right) π}{{N}_{s}}}+{{R}_{2}}^{H}{e}^{\frac{j 4 ( {N}_{s} - 2 ) π}{{N}_{s}}}+{R}_{2}{e}^{\frac{- j 4 ( {N}_{s} - 2 ) π}{{N}_{s}}}+{R}_{1}{e}^{\frac{- j 2 ( {N}_{s} - 2 ) π}{{N}_{s}}}\right)$

Λ^{(*N*_{*s*})} is per Equation 23. ${Λ}^{\left({N}_{s}\right)} = \left({R}_{0}+{{R}_{1}}^{H}{e}^{\frac{j 2 \left({N}_{s}-1\right) π}{{N}_{s}}}+{{R}_{2}}^{H}{e}^{\frac{j 4 ( {N}_{s} - 1 ) π}{{N}_{s}}}+{R}_{2}{e}^{\frac{- j 4 ( {N}_{s} - 1 ) π}{{N}_{s}}}+{R}_{1}{e}^{\frac{- j 2 ( {N}_{s} - 1 ) π}{{N}_{s}}}\right)$ Although Equations 17-23 illustrate using the first row of R_{C}D and *D*Λ, any row can be used to determine the Λ^{(*i*)}*s*.

To illustrate using a center row, (Nₛ/2)^{th} row (row 5 of Equation 7), Λ⁽¹⁾ is per Equation 19. ${Λ}^{\left(1\right)} = \begin{matrix}\left({R}_{0}+{R}_{1}^{H}+{R}_{2}^{H}+{R}_{1}+{R}_{2}\right)\end{matrix}$ Equations 19-23 compute the FFT ofK by K blocks. Since these blocks are multiplied by scalar exponentials, this process is referred to as a "block FFT." Typical approaches for calculating FFTs, such as the Matlab function "fft" compute the FFTs ofa one-sided sequence. Since each Λ^{(*i*)} is atwo sided sequence, the computation of Λ^{(*i*)} can be implemented by a fft {0,0,···,*R*₂,*R*₁,*R*₀,*R*₁^{*H*}, *R*₂^{*H*},···,0,0 and multiplying it by an appropriate exponential function as per Equation 27 for a center row. ${e}^{j 2 π \left(k-1\right) v} , where v = \frac{\left[ceil\left(\frac{{N}_{s}}{2}\right)-1\right]}{{N}_{s}}$

As shown in Equations 17-27, calculating all the Λ^{(*i*)} can be performed using a single column of R. Accordingly, R_{C} is not required to be determined. Any column of R can be used to derive the Λ^{(*i*)} s directly. Preferably, a row at least W rows from either edge of R is used, since these rows have a full set of Rᵢs.

Using the Λ^{(*i*)} s and the D matrix, the block-circulant matrix R_{c} can be rewritten as Equations 28 and 29. ${R}_{c} D = D \begin{matrix}\end{matrix} Λ$ ${R}_{c} = \left(1/{N}_{s}\right) \left[D\begin{matrix}\end{matrix}Λ{D}^{H}\right]$ D and D^{H} are each of size (KNₛ) by (KNₛ).

Since *D*^{*H*}*D=N*_{*s*}*I*_{*KN*_{*s*}}*,D*^{*-1*}=(1/*N*_{*s*})*D*^{*H*}, Equation 30 results. ${{R}_{c}}^{- 1} = {N}_{s} \left[{\left({D}^{H}\right)}^{- 1}{Λ}^{- 1}{\left(D\right)}^{- 1}\right] = {N}_{s} \left[\frac{D}{{N}_{s}}{Λ}^{- 1}\frac{{D}^{H}}{{N}_{s}}\right]$

The MMSE solution is per Equation 31. ${d}_{̲} = {R}_{c}^{- 1} \left({A}^{H}{r}_{̲}\right)$ The detected data vector *d* is of size (NₛK) by 1.

The MMSE solution is per Equation 32. ${D}^{H} {d}_{̲} = {Λ}^{- 1} \left[{D}^{H}\left({A}^{H}{r}_{̲}\right)\right]$ The matrix Λ is of size (KNₛ) by (KNₛ) with K by K blocks, and its inverse is per Equation 33. ${Λ}^{- 1} = {\left[\begin{matrix}{Λ}^{\left(1\right)} & & & & \\ & {Λ}^{\left(2\right)} & & & \\ & & {Λ}^{\left(3\right)} & & \\ & & & ⋱ & \\ & & & & {Λ}^{\left({N}_{s}\right)}\end{matrix}\right]}^{- 1} = \left[\begin{matrix}{\begin{matrix}\left[\begin{matrix}{Λ}^{\left(1\right)}\end{matrix}\right]\end{matrix}}^{- 1} & & & & \\ & {\begin{matrix}\left[\begin{matrix}{Λ}^{\left(2\right)}\end{matrix}\right]\end{matrix}}^{- 1} & & & \\ & & {\begin{matrix}\left[\begin{matrix}{Λ}^{\left(3\right)}\end{matrix}\right]\end{matrix}}^{- 1} & & \\ & & & ⋱ & \\ & & & & {\begin{matrix}\left[\begin{matrix}{Λ}^{\left({N}_{s}\right)}\end{matrix}\right]\end{matrix}}^{- 1}\end{matrix}\right]$ The inversion requires an inversion of the K by K matrices Λ^{(*k*)}.

As a result, the data vector *d* is determined per Equation 34. ${\left[F\left({d}_{̲}\right)\right]}_{k} = {\left[{Λ}^{\left(k\right)}\right]}^{- 1} {\left[F\left({A}^{H}{r}_{̲}\right)\right]}_{k}$ Equation 34 is applicable to both receivers which sample the received signal at the chip rate and at a multiple of the chip rate, such as twice the chip rate. For multiple chip rate receivers, the R matrix corresponding to the multiple chip rate is of the same form as Equation 9, being approximately block circulant.

To reduce the complexity in determining *F*(*A*^{*H*}*r*), an FFT approach taking advantage of the structure of A may be used. A has an approximately block-circulant structure. However, it is a non-square matrix, being of size (NₛSF) by (NₛK). An illustration of a matrix A is per Equation 35. $A = \left[\begin{matrix}\left[\begin{matrix}{\begin{matrix}{b}_{1}\end{matrix}}^{\left(1\right)} \left(0\right) & {\begin{matrix}{b}_{1}\end{matrix}}^{\left(K\right)} \left(0\right) \\ {\begin{matrix}{b}_{SF}\end{matrix}}^{\left(1\right)} \left(0\right) & {\begin{matrix}{b}_{SF}\end{matrix}}^{\left(K\right)} \left(0\right)\end{matrix}\right] & O & O & ⋯ \\ \left[\begin{matrix}{\begin{matrix}{b}_{1}\end{matrix}}^{\left(1\right)} \left(1\right) & {\begin{matrix}{b}_{1}\end{matrix}}^{\left(K\right)} \left(1\right) \\ {\begin{matrix}{b}_{SF}\end{matrix}}^{\left(1\right)} \left(1\right) & {\begin{matrix}{b}_{SF}\end{matrix}}^{\left(K\right)} \left(1\right)\end{matrix}\right] & \left[\begin{matrix}\begin{matrix}{\begin{matrix}{b}_{1}\end{matrix}}^{\left(1\right)} \left(0\right) & {\begin{matrix}{b}_{1}\end{matrix}}^{\left(K\right)} \left(0\right) \\ {\begin{matrix}{b}_{SF}\end{matrix}}^{\left(1\right)} \left(0\right) & {\begin{matrix}{b}_{SF}\end{matrix}}^{\left(K\right)} \left(0\right)\end{matrix}\end{matrix}\right] & O & ⋯ \\ \left[\begin{matrix}\begin{matrix}{\begin{matrix}{b}_{1}\end{matrix}}^{\left(1\right)} \left(2\right) & {\begin{matrix}{b}_{1}\end{matrix}}^{\left(K\right)} \left(2\right) \\ {\begin{matrix}{b}_{SF}\end{matrix}}^{\left(1\right)} \left(2\right) & {\begin{matrix}{b}_{SF}\end{matrix}}^{\left(K\right)} \left(2\right)\end{matrix}\end{matrix}\right] & \left[\begin{matrix}\begin{matrix}{\begin{matrix}{b}_{1}\end{matrix}}^{\left(1\right)} \left(1\right) & {\begin{matrix}{b}_{1}\end{matrix}}^{\left(K\right)} \left(1\right) \\ {\begin{matrix}{b}_{SF}\end{matrix}}^{\left(1\right)} \left(1\right) & {\begin{matrix}{b}_{SF}\end{matrix}}^{\left(K\right)} \left(1\right)\end{matrix}\end{matrix}\right] & \left[\begin{matrix}\begin{matrix}{\begin{matrix}{b}_{1}\end{matrix}}^{\left(1\right)} \left(0\right) & {\begin{matrix}{b}_{1}\end{matrix}}^{\left(K\right)} \left(0\right) \\ {\begin{matrix}{b}_{SF}\end{matrix}}^{\left(1\right)} \left(0\right) & {\begin{matrix}{b}_{SF}\end{matrix}}^{\left(K\right)} \left(0\right)\end{matrix}\end{matrix}\right] & ⋯ \\ ⋮ & ⋮ & ⋮ & ⋮\end{matrix}\right]$ Each *b*_{*j*}^{(*k*)}(*i*) is the convolution of the channel response h^{(k)} and the spreading code c^{(k)}, for the k^{th} user at the j^{th} chip interval of the i^{th} symbol interval.

Using blocks *B*(·), where each block is indicated by bracketing in Equation 35, Equation 35 becomes Equation 36. $A = \left[\begin{matrix}B \left(0\right) & 0 & 0 & 0 & ⋯ & 0 \\ B \left(0\right) & B \left(0\right) & 0 & 0 & ⋯ & 0 \\ B \left(0\right) & B \left(0\right) & B \left(0\right) & 0 & ⋯ & 0 \\ ⋮ & ⋮ & ⋮ & ⋮ & ⋮ & ⋮ \\ 0 & 0 & ⋯ & B \left(0\right) & B \left(1\right) & B \left(0\right) \\ ⋮ & ⋮ & & ⋮ & ⋮ & ⋮\end{matrix}\right]$

As shown, a portion of A is block-circulant. A circulant extension of A is denoted as A_{c}.
A can be broken into three matrices per Equation 37. $A = {D}_{1} {Λ}_{1} {D}_{2}^{H}$ D₁ is a (NₛSF) by (NₛSF) matrix. D₂ is a (NₛK) by (NₛK) matrix and Λ₁ is a block-diagonal matrix of size (NₛSF) by (NₛK).

The block diagonal matrix Λ₁ has the same form as A of Equation 14. However, each of its entries Λ₁^{(*i*)} is a SF by K block per Equation 38. ${{Λ}_{1}}^{\left(i\right)} = \left[\begin{matrix}{\begin{matrix}{λ}_{1 , 1}\end{matrix}}^{\left(i\right)} & ⋯ & {\begin{matrix}\begin{matrix}{λ}_{1 , K}\end{matrix}\end{matrix}}^{\left(i\right)} \\ ⋮ & & ⋮ \\ {\begin{matrix}\begin{matrix}\begin{matrix}{λ}_{SF , 1}\end{matrix}\end{matrix}\end{matrix}}^{\left(i\right)} & ⋯ & {\begin{matrix}\begin{matrix}\begin{matrix}{λ}_{SF , K}\end{matrix}\end{matrix}\end{matrix}}^{\left(i\right)}\end{matrix}\right]$

*D*₂ is the same form as that of D in Equation 11. *D*₁ is of the form of Equation 39. ${D}_{1} = \left[\begin{matrix}I & {e}^{\frac{j 2 π}{{N}_{s}}} {I}_{SF} & {e}^{\frac{j 4 π}{{N}_{s}}} {I}_{SF} & ⋯ & ⋯ & {e}^{\frac{j 18 π}{{N}_{s}}} {I}_{SF} \\ I & {e}^{\frac{j 4 π}{{N}_{s}}} {I}_{SF} & {e}^{\frac{j 8 π}{{N}_{s}}} {I}_{SF} & ⋯ & ⋯ & {e}^{\frac{j 36 π}{{N}_{s}}} {I}_{SF} \\ ⋮ & ⋮ & ⋮ & & & ⋮ \\ I & {e}^{\frac{j 18 π}{{N}_{s}}} {I}_{SF} & {e}^{\frac{j 36 π}{{N}_{s}}} {I}_{SF} & ⋯ & ⋯ & {e}^{\frac{j 162 π}{{N}_{s}}} {I}_{SF} \\ I & {e}^{\frac{j 20 π}{{N}_{s}}} {I}_{SF} & {e}^{\frac{j 40 π}{{N}_{s}}} {I}_{SF} & ⋯ & ⋯ & {e}^{\frac{j 180 π}{{N}_{s}}} {I}_{SF}\end{matrix}\right]$ *I*_{*SF*} is a SF by SF identity matrix.

In multiplying A_{C} and D₂, products of the form, B(i) and $\begin{matrix}{e}^{\frac{j 2 π}{{N}_{s}}} {I}_{K}\end{matrix} ,$ are formed per Equation 40. ${A}_{c} {D}_{2} = \left[\begin{matrix}\left[B\left(0\right)+B\left(1\right)+B\left(2\right)\right] & \left[B\left(0\right){e}^{\frac{j 2 π}{{N}_{s}}}+B\left(2\right){e}^{\frac{j 18 π}{{N}_{s}}}+B\left(1\right){e}^{\frac{j 20 π}{{N}_{s}}}\right] & ⋯ & \left[B\left(0\right){e}^{\frac{j 18 π}{{N}_{s}}}+B\left(2\right){e}^{\frac{j 162 π}{{N}_{s}}}+B\left(1\right){e}^{\frac{j 180 π}{{N}_{s}}}\right] \\ \left[B\left(0\right)+B\left(1\right)+B\left(2\right)\right] & \left[B\left(1\right){e}^{\frac{j 2 π}{{N}_{s}}}+B\left(0\right){e}^{\frac{j 4 π}{{N}_{s}}}+B\left(2\right){e}^{\frac{j 20 π}{{N}_{s}}}\right] & ⋯ & \left[B\left(1\right){e}^{\frac{j 18 π}{{N}_{s}}}+B\left(0\right){e}^{\frac{j 36 π}{{N}_{s}}}+B\left(2\right){e}^{\frac{j 180 π}{{N}_{s}}}\right] \\ ⋮ & ⋮ & & ⋮ \\ \left[B\left(0\right)+B\left(1\right)+B\left(2\right)\right] & \left[B\left(2\right){e}^{\frac{j 16 π}{{N}_{s}}}+B\left(1\right){e}^{\frac{j 18 π}{{N}_{s}}}+B\left(0\right){e}^{\frac{j 20 π}{{N}_{s}}}\right] & ⋯ & \left[B\left(2\right){e}^{\frac{j 144 π}{{N}_{s}}}+B\left(1\right){e}^{\frac{j 162 π}{{N}_{s}}}+B\left(0\right){e}^{\frac{j 180 π}{{N}_{s}}}\right] \\ ⋮ & ⋮ & & ⋮\end{matrix}\right]$ *A*_{*c*}*D*₂ is of size (NₛSF) by (NₛK) and each block is a size SF by K.

In multiplying D₁ and Λ₁, products of the form, $\begin{matrix}{e}^{\frac{j 2 π}{{N}_{s}}} {I}_{SF}\end{matrix}$ and Λ₁^{(*t*)}, are formed. *D*₁Λ₁ is of size (NₛSF) by (NₛK) and each block is of size SF by K. Comparing any row of *A*_{*c*}*D*₂ with the same row of *D*₁Λ₁, Equation 41 results. $\begin{matrix}{\begin{matrix}{Λ}_{1}\end{matrix}}^{\left(1\right)} = \left[B\left(0\right)+B\left(1\right)+B\left(2\right)\right] , \\ {\begin{matrix}{Λ}_{1}\end{matrix}}^{\left(2\right)} = \left[B\left(0\right)+B\left(1\right){e}^{\frac{- j 2 π}{{N}_{s}}}+B\left(2\right){e}^{\frac{- j 4 π}{{N}_{s}}}\right] , \\ ⋮ \\ {\begin{matrix}{Λ}_{1}\end{matrix}}^{\left({N}_{s}-1\right)} = \left[B\left(0\right)+B\left(1\right){e}^{\frac{- j 2 \left({N}_{s}-2\right) π}{{N}_{s}}}+B\left(2\right){e}^{\frac{- j 4 \left({N}_{s}-2\right) π}{{N}_{s}}}\right] , \\ {\begin{matrix}{Λ}_{1}\end{matrix}}^{\left({N}_{s}\right)} = \left[B\left(0\right)+B\left(1\right){e}^{\frac{- j 2 \left({N}_{s}-1\right) π}{{N}_{s}}}+B\left(2\right){e}^{\frac{- j 4 \left({N}_{s}-1\right) π}{{N}_{s}}}\right] .\end{matrix}$

As a result, each Λ₁^{(*k*)} can be determined using the FFT of a one-sided sequence of (SF by K) blocks. Using Equation 38 and D₂^{H} D₂ = Nₛ I_{KNs}, Equations 42, 43 and 44 result. $A = {D}_{1} {Λ}_{1} {{D}_{2}}^{H} ,$ ${A}^{H} {r}_{̲} = {D}_{2} {Λ}_{1}^{H} \left({D}_{1}^{H}{r}_{̲}\right)$ ${D}_{2}^{H} \left({A}^{H}{r}_{̲}\right) = {N}_{s} ⋅ \left[{Λ}_{1}^{H}\left({D}_{1}^{H}{r}_{̲}\right)\right]$

Accordingly, [*F*(*A*^{*H*}*r*)]_{*k*} is determined using FFTs per Equation 45. ${\left[F\left({A}^{H}{r}_{̲}\right)\right]}_{k} = {N}_{s} ⋅ {\left[{Λ}_{1}^{\left(k\right)}\right]}^{H} {\left[F\left({r}_{̲}\right)\right]}_{k}$ Similarly, since the matrix A is approximately block-circulant, R = A^{H}A + σ²*I* can also be computed using FFTs using Λ₁.

To reduce complexity, the inversion of each Λ^{(*i*)}, [Λ^{(*i*)}]⁻¹, can be performed using LU decomposition. Each [Λ^{*i*}] is a (K by K) matrix whose LU decomposition is per Equation 46. ${Λ}^{\left(i\right)} = LU$

L is a lower triangular matrix and U is an upper triangular matrix. Equation 7 is solved using forward and backward substitution per Equations 47 and 48. $\left[{Λ}_{g}^{\left(k\right)}\right] y = {\left[F\left({A}^{H}{r}_{̲}\right)\right]}_{k}$ $y = {\left[{Λ}_{g}^{\left(k\right)}\right]}^{H} {\left[F\left({d}_{̲}\right)\right]}_{k}$

Preferably, to improve the bit error rate (BER) for data symbols at the ends of each data field 22, 24, samples from the midamble portion 20 and guard period 18 are used in the data detection as shown in Figure 5. To collect all the samples of the last symbols in the data fields, the samples used to determine *r* are extended by W-1 chips (the length of the impulse response) into the midamble 20 or guard period 18. This extension allows for substantially all the multipath components of the last data symbols of the field to be used for data detection. As shown for data field 1 22, the samples are extended into the midamble by W-1 chips. The midamble sequences are cancelled from the samples taken from the midamble 20 prior to data detection processing. For data field 2 24, the samples are extended into the guard period 18 by W-1 chips.

Certain FFT implementations required a certain field length for analysis. One of these FFT implementations is a prime factor algorithm (PFA). The PFA implementation requires the field length to be a prime number, such as 61. To facilitate PFA FFT implementation, the samples used to determine r are preferably extended to a desired PFA length. As shown in Figure 5, data field 1 or data field 2 are extended by P chips to the desired PFA length. Alternately, block FFTs of 61 symbols are extended to block FFTs of length 64, which requires 2ⁿ FFT calculations. Since the approximation of R to a block circulant matrix is reduced, the performance typically improves.

An analysis of the computational complexity of fast joint detection is as follows. The computational complexity of calculating A is *K·SF·W*. The computational complexity of calculating A^{H}A is per Equation 49. $\frac{\left({K}^{2}+K\right)}{2} \left[2\left(SF+W-1\right)-\left({n}_{max}-1\right)\right] \frac{{n}_{max}}{2} - \frac{\left({K}^{2}-K\right)}{2} ( SF + W - 1 )$
where *n*ₘₐₓ = min(*N*_{*s*},(*SF* + *W*-1)/*SF*)+1)

Calculating (*A*^{*H*}*r*) A as a matrix-vector multiplication has a computational complexity of K Nₛ (SF + W-1). Calculating the FFT of a j^{th} column-block of R requires *K*² · (*N*_{*s*} log₂ *N*_{*s*}) calculations. Calculating the Fourier transform of *A*^{*H*}*r* requires K(Nₛ log2 Nₛ) calculations. The inversion of each matrix [Λ^{(*k*)}], without Cholesky decomposition, requires K³ calculations. For Nₛ frequency points, the total number of calculations is Nₛ K³. Calculating [*F*(*d*)]_{*k*} = [*Λ*^{(*k*)}]⁻¹[*F*(*A*^{*H*}*r*)]_{*k*} requires (K²) multiplications for Nₛ frequency points. Accordingly, the total number of calculations is Nₛ K². The Inverse FFT of [F(d)] requires K(Nₛ log2 Nₛ) calculations.

To illustrate the complexity for fast joint detection, the million real operations per second (MROPs) for processing a TDD Burst Type I with N_{c} = 976, SF = 16, K = 8, Nₛ = 61 and W = 57 chips is determined. The calculations A, (A^{H}A), a column-block of R, [Λ^{(*k*)}]⁻¹ are performed once per burst, i.e. 100 times per second. The calculations A^{H}r, F [A^{H}r],computing [*F*(*d*)]_{*k*} and the inverse FFT of [F(d)] are performed twice per burst, i.e. 200 times per second. Four calculations are required to convert a complex operation into a real operation. The results are illustrated in Table 1.

**Table 1**

| Functions executed once per burst | MROPS |
|---|---|
| Calculating A | 3.0 |
| Calculating A^{H}A | 4.4 |
| Calculating F([R]ⱼ] | 9.2614 |
| Calculating [Λ^{(*k*)}]⁻¹ | 12.4928 |

| Functions executed twice per burst | |
|---|---|
| Calculating A^{H}r | 28.11 |
| Calculating F[A^{H}r] | 2.3154 |
| Calculating [*F*(**d**^)]_{*k*}*=*[Λ^{(*k*)}]⁻¹[F(A^{*H*}**r**)]_{*k*} | 3.1232 |
| Inverse FFT of [F(**d**^)] | 2.3154 |
| Total number of MROPS required for fast joint detection | 65.0182 |

| | |
|---|---|
| Note: in Table 1, (A^{H}r) was calculated directly as a matrix-vector multiplication. | |

IfLU decomposition is used to determine [Λ^{(*k*)}]⁻¹, the complexity reduces to 54.8678 MROPS. If FFTs are used to determine (*A*^{*H*}*r*), the complexity reduces from 65.0182 MROPS to 63.9928 MROPS.

A comparison of the complexity of fast joint detection and other detection techniques is as follows. The complexity of the following three techniques for a TDD Burst Type I with SF = 16 and K = 8 is per Table 2.

**Table 2**

| Technique | MROPS |
|---|---|
| Approximate Cholesky based Joint Detection, (JDChol) | 82.7 |
| Single User Detection: Approximate Cholesky based | |
| Equalization followed by a Hadamard Transform based | |
| Despreading (SDChol) | 205.2276 |
| Fast Joint Detection (JDFFT) | 65.0182 |

The performance of the three detection techniques and a reference matched filtering (MF) data detection technique were compared by simulation over 800 timeslots. The simulations used the precision provided by Matlab, i.e. no finite precision effects were considered. The simulations used channels specified by WCDMA TDD WG4; SF =16 and K = 8 and 12 and were performed for the downlink with no transmit diversity to facilitate comparison to SUD.

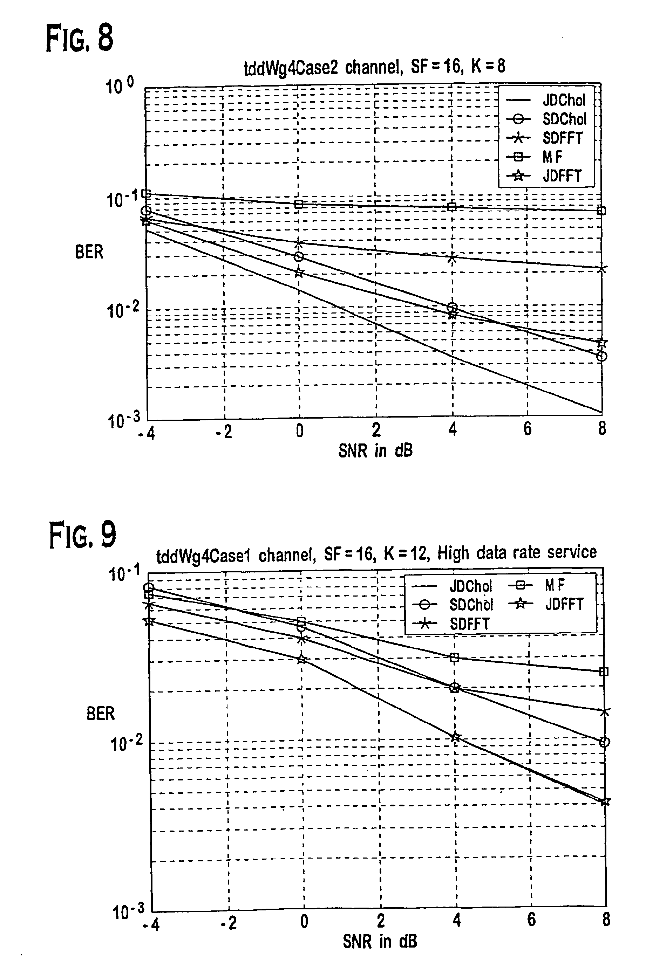

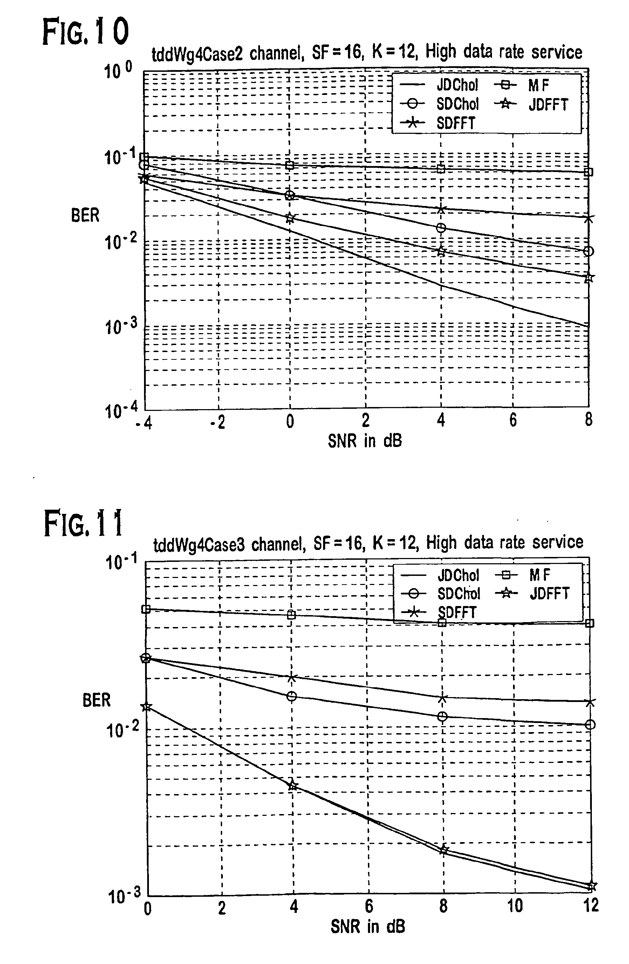

As shown in Figures 6 and 7, respectively, for cases 1 and 3, the performance of fast joint detection, JDFFT, is very close to that of the Cholesky based Joint Detection, JDChol. The other data detection approaches did not perform as well as JDChol or JDFFT. For the tddWg4Case2 channel as shown in Figure 8. JDFFT shows some degradation compared to JDChol. It also performs similarly to the SUD based Cholesky algorithm, SDChol. For a high data rate service, such as a 2 Mbps service, as shown in Figures 9-11. JDFFT performs close to or slightly worse than JDChol and better than the other approaches.

## Claims

1. A method for detecting data from a plurality of K data signals transmitted over a shared spectrum in a code division multiple access communication system, the method comprising:
receiving and sampling a combined signal having the K transmitted data signals over the shared spectrum producing combined signal samples;
producing a combined channel response matrix using a convolution of spreading codes and impulse responses of the K data signals (48);
determining a complex conjugate transpose of the combined channel response matrix; multiplying the complex conjugate transpose of the combined channel response matrix to the combined signal samples (51);
determining a correlation matrix using the combined channel response matrix (49);
**characterized in that** the method further comprises the following steps:
taking a fourier transform of the complex conjugate transpose of the combined channel response matrix multiplied to the combined signal samples;
determining a block column of the correlation matrix, each block entry of the block column being a K by K matrix;
taking a fourier transform of each block entry of the block column;
multiplying a matrix inverse of the fourier transform of each block entry of the block column to the result of the fourier transform of the complex conjugate transpose of the combined channel response matrix multiplied to the.combined signal samples to produce a fourier transform of a data vector (50); and
taking an inverse fourier transform of the fourier transform of the data vector to produce data of the K data signals (55).

2. The method of claim 1 wherein the step of taking the fourier transform is performed by multiplying the conjugate transpose of the combined channel response matrix to the combined signal samples and taking fourier transform of a result of the conjugate transpose multiplication.

3. The method of claim 1 wherein a LU decomposition of the block entries is used to determine the K data signals.

4. The method of claim 1 wherein the data determining occurs over a data field time period of a time division duplex communication burst and the combined signal samples extend beyond the data field time period.

5. The method of claim 4 wherein extended samples of the combined signal samples extend beyond the data field time period for a length corresponding to the length of the impulse response.

6. The method ofclaim4whereinthe combined signal samples extend beyond the data field time period so that the length of the combined signals is a length compatible with a prime factor algorithm fast fourier transform.

7. A receiver for use in a code division multiple access communication system, for receiving a plurality of K transmitted data signals over a shared spectrum, the receiver comprising:
means for receiving and sampling a combined signal having the K transmitted data signals over the shared spectrum producing combined signal samples;
means for producing a combined channel response matrix using a convolution of codes and impulse responses of the K data signals;
means for determining a complex conjugate transpose of the combined channel response matrix;
means for multiplying the complex conjugate transpose of the combined channel response matrix to the combined signal samples;
means for determining a correlation matrix using the combined channel response matrix;
**characterized in that** the receiver further comprises the following steps:
means for taking a fourier transform of a complex conjugate transpose of the combined channel response matrix multiplied to the combined signal samples;
means for determining a block column of the correlation matrix, each block entry of the block column being a K by K matrix;
means for taking a fourier transform of each block entry of the block column;
means for multiplying a matrix inverse of the fourier transform of each block entry of the block column to the result of the fourier transform of the complex conjugate transpose of the combined channel response matrix multiplied to the combined signal samples to produce a fourier transform of the data vector; and
means for taking an inverse fourier transform of the fourier transform of the data vector to produce data of the K data signals.

8. The receiver of claim 7 wherein the means for taking the fourier transform comprises means for multiplying the conjugate transpose of the combined channel response matrix to the combined signal samples and taking fourier transform of a result of the conjugate transpose multiplication.

9. The receiver of claim 7 wherein the receiver further comprises means for performing a Cholesky decomposition of the block entries of the diagonal matrix to determine the K data signals.

10. The receiver of claim 7 wherein the data determining occurs over a data field time period of a time division duplex communication burst and the combined signal samples extend beyond the data field time period.

11. The receiver of claim 10 wherein extended samples of the combined signal samples extends beyond the data field time period for a length corresponding to the length of the impulse response.

12. The receiver of claim 10 wherein the combined signal samples extends beyond the data field time period so that the length of the combined signals is a length compatible with a prime factor algorithm fast fourier transform.

13. The receiver of any one of claims 7-12, further comprising:
a channel estimator for estimating impulse response of the K data signals,
and wherein said means for receiving and sampling are implemented in an antenna and a sampling device, respectively;
said means for producing, means for determining, means for taking a fourier transform, means for multiplying and said means for taking an inverse fourier transform are implemented in a data detection device.

## Patentansprüche

1. Verfahren zum Erfassen von Daten von mehreren K Datensignalen, die über ein gemeinsames Spektrum in einem Codemultiplex-Vielfachzugriff- (CDMA-) Kommunikationssystem übertragen werden, wobei das Verfahren die Schritte aufweist:
Empfangen und Abtasten eines kombinierten Signals, das die K übertragenen Datensignale enthält, über das gemeinsame Spektrum zum Erzeugen kombinierter Signalabtastwerte;
Erzeugen einer kombinierten Kanalantwortmatrix unter Verwendung einer Faltung von Spreizcodes und Impulsantworten der K Datensignale (48);
Bestimmen einer komplex konjugierten Transponierten der kombinierten Kanalantwortmatrix;
Multiplizieren der komplex konjugierten Transponierten der kombinierten Kanalantwortmatrix mit den kombinierten Signalabtastwerten (51);
Bestimmen einer Korrelationsmatrix unter Verwendung der kombinierten Kanalantwortmatrix (49);
**dadurch gekennzeichnet, dass das Verfahren ferner die Schritte aufweist:**
Ausführen einer Fouriertransformation für die mit den kombinierten Signalabtastwerten multiplizierte komplex konjugierte Transponierte der kombinierten Kanalantwortmaterix;
Bestimmen einer Blockspalte der Korrelationsmatrix, wobei jedes Blockelement der Blockspalte eine K×K-Matrix ist;
Ausführen einer Fouriertransformation für jedes Blockelement der Blockspalte;
Multiplizieren einer Matrix-Inversen der Fouriertransformierten jedes Blockelements der Blockspalte mit dem Ergebnis der Fouriertransformation der mit den kombinierten Signalabtastwerten multiplizierten komplex konjugierten Transponierten der kombinierten Kanalantwortmatrix zum Erzeugen einer Fouriertransformierten eines Datenvektors (50); und
Ausführen einer inversen Fouriertransformation für die Foriertransformierte des Datenvektors zum Erzeugen von Daten der K Datensignale (55).

2. Verfahren nach Anspruch 1, wobei der Schritt zum Ausführen der Fouriertransformation durch Multiplizieren der konjugierten Transponierten der kombinierten Kanalantwortmatrix mit den kombinierten Signalabtastwerten und Ausführen einer Fouriertransformation eines Ergebnisses der Multiplikation der konjugierten Transponierten ausgeführt wird.

3. Verfahren nach Anspruch 1, wobei zum Bestimmen der K Datensignale eine LU-Zerlegung der Blockelemente verwendet wird.

4. Verfahren nach Anspruch 1, wobei die Daten über eine Datenfeldzeitperiode eines Zeitduplex-Kommunikationsburstsignals bestimmt werden und die kombinierten Signalabtastwerte über die Datenfeldzeitperiode hinaus erweitert sind.

5. Verfahren nach Anspruch 4, wobei die erweiterten Abtastwerte der kombinierten Signalabtastwerte über eine Länge über die Datenfeldzeitperiode hinaus erweitert sind, die der Länge der Impulsantwort entspricht.

6. Verfahren nach Anspruch 4, wobei die kombinierten Signalabtastwerte über die Datenfeldzeitperiode hinaus erweitert sind, so dass die Länge der kombinierten Signale einer Länge entspricht, die mit einer Primfaktoralgorithmus-FFT-Transformation (schnelle Fouriertransformation) kompatibel ist.

7. Empfänger zur Verwendung in einem Codemultiplex-Vielfachzugriff-Kommunikationssystem zum Empfangen von über ein gemeinsames Spektrum übertragenen mehreren K Datensignalen, wobei der Empfänger aufweist:
eine Einrichtung zum Empfangen und Abtasten eines kombinierten Signals, das die K übertragenen Datensignale enthält, über das gemeinsame Spektrum zum Erzeugen kombinierter Signalabtastwerte;
eine Einrichtung zum Erzeugen einer kombinierten Kanalantwortmatrix unter Verwendung einer Faltung von Codes und Impulsantworten der K Datensignale;
eine Einrichtung zum Bestimmen einer komplex konjugierten Transponierten der kombinierten Kanalantwortmatrix;
eine Einrichtung zum Multiplizieren der komplex konjugierten Transponierten der kombinierten Kanalantwortmatrix mit den kombinierten Signalabtastwerten;
eine Einrichtung zum Bestimmen einer Korrelationsmatrix unter Verwendung der kombinierten Kanalantwortmatrix;
**dadurch gekennzeichnet, dass der Empfänger ferner aufweist:**
eine Einrichtung zum Ausführen einer Fouriertransformation für die mit den kombinierten Signalabtastwerten multiplizierte komplex konjugierte Transponierte der kombinierten Kanalantwortmaterix;
eine Einrichtung zum Bestimmen einer Blockspalte der Korrelationsmatrix, wobei jedes Blockelement der Blockspalte eine K×K-Matrix ist;
eine Einrichtung zum Ausführen einer Fouriertransformiertion für jedes Blockelement der Blockspalte;
eine Einrichtung zum Multiplizieren einer Matrix-Inversen der Fouriertransformierten jedes Blockelements der Blockspalte mit dem Ergebnis der Fouriertransformation der mit den kombinierten Signalabtastwerten multiplizierten komplex konjugierten Transponierten der kombinierten Kanalantwortmatrix zum Erzeugen einer Fouriertransformierten eines Datenvektors; und
eine Einrichtung zum Ausführen einer inversen Fouriertransformation für die Fouriertransformierte des Datenvektors zum Erzeugen von Daten der K Datensignale.

8. Empfänger nach Anspruch 7, wobei die Einrichtung zum Ausführen einer Fouriertransformation eine Einrichtung zum Multiplizieren der konjugierten Transponierten der kombinierten Kanalantwortmatrix mit den kombinierten Signalabtastwerten und Ausführen einer Fouriertransformation eines Ergebnisses der Multiplikation der konjugierten Transponierten aufweist.

9. Empfänger nach Anspruch 7, wobei der Empfänger ferner eine Einrichtung zum Ausführen einer Cholesky-Zerlegung der Blockelemente der Diagonalmaterix zum bestimmen der K Datensignale aufweist.

10. Empfänger nach Anspruch 7, wobei die Datenbestimmung über eine Datenfeldzeitperiode eines Zeitduplex-Kommunikationsburstsignals ausgeführt wird und die kombinierten Signalabtastwerte über die Datenfeldzeitperiode hinaus erweitert sind.

11. Empfänger nach Anspruch 10, wobei die erweiterten Abtastwerte der kombinierten Signalabtastwerte über eine Länge über die Datenfeldzeitperiode hinaus erweitert sind, die der Länge der Impulsantwort entspricht.

12. Empfänger nach Anspruch 10, wobei die kombinierten Signalabtastwerte über die Datenfeldzeitperiode hinaus erweitert sind, so dass die Länge der kombinierten Signale einer Länge entspricht, die mit einer Primfaktoralgorithmus-FFT-Transformation (schnelle Fouriertransformation) kompatibel ist.

13. Empfänger nach einem der Ansprüche 7 bis 12, ferner mit:
einer Kanalschätzeinrichtung zum Schätzen einer Kanalimpulsantwort der K Datensignale;
wobei die Empfangs- und die Abtasteinrichtung in einer Antenne bzw. in einer Abtastvorrichtung implementiert ist; und
wobei die Einrichtung zum Erzeugen einer kombinierten Kanalantwortmatrix, die Bestimmungseinrichtung, die Einrichtung zum Ausführen einer Fouriertransformation, die Multipliziereinrichtung und die Einrichtung zum Ausführen einer inversen Fouriertransformation in einer Datenerfassungseinrichtung implementiert sind.

## Revendications

1. Procédé de détection de données à partir d'une pluralité de K signaux de données transmis sur un spectre partagé dans un système de communication à accès multiple à répartition par code, le procédé comprenant :
la réception et l'échantillonnage d'un signal combiné ayant les K signaux de données transmis sur le spectre partagé produisant des échantillons de signaux combinés ;
la production d'une matrice de réponse de canal combiné utilisant une convolution de codes d'étalement et des réponses impulsionnelles des K signaux de données (48) ;
la détermination d'une transposée du conjugué complexe de la matrice de réponse de canal combiné ;
la multiplication de la transposée du conjugué complexe de la matrice de réponse de canal combiné par les échantillons de signaux combinés (51) ;
la détermination d'une matrice de corrélation utilisant la matrice de réponse de canal combiné (49) ;
**caractérisé en ce que** le procédé comprend en outre les étapes suivantes :
réaliser une transformée de Fourier de la transposée du conjugué complexe de la matrice de réponse de canal combiné multipliée par les échantillons de signaux combinés ;
déterminer un bloc colonne de la matrice de corrélation, chaque bloc entrée du bloc colonne étant une matrice K par K ;
réaliser une transformée de Fourier de chaque bloc entrée du bloc colonne ;
multiplier une matrice inverse de la transformée de Fourier de chaque bloc entrée du bloc colonne par le résultat de la transformée de Fourier de la transposée du conjugué complexe de la matrice de réponse de canal combiné multipliée par les échantillons de signaux combinés pour produire une transformée de Fourier d'un vecteur de données (50) ; et
réaliser une transformée de Fourier inverse de la transformée de Fourier du vecteur de données pour produire des données des K signaux de données (55).

2. Procédé selon la revendication 1, dans lequel l'étape de réalisation de la transformée de Fourier est réalisée par multiplication de la transposée du conjugué de la matrice de réponse de canal combiné par les échantillons de signaux combinés et la réalisation de la transformée de Fourier sur un résultat de la multiplication de la transposée du conjugué.

3. Procédé selon la revendication 1, dans lequel une décomposition UL des blocs entrée est utilisée pour déterminer les K signaux de données.

4. Procédé selon la revendication 1, dans lequel la détermination des données se produit sur une période temporelle de champs de données d'une salve de communication duplex à répartition dans le temps et les échantillons de signaux combinés s'étendent au-delà de la période temporelle de champs de données.

5. Procédé selon la revendication 4, dans lequel les échantillons étendus provenant des échantillons de signaux combinés s'étendent au-delà de la période temporelle de champs de données sur une longueur correspondant à la longueur de la réponse impulsionnelle.

6. Procédé selon la revendication 4, dans lequel les échantillons de signaux combinés s'étendent au-delà de la période temporelle de champs de données de manière à ce que la longueur des signaux combinés soit une longueur compatible avec la transformée de Fourier rapide de l'algorithme du facteur premier.

7. Récepteur destiné à être utilisé dans un système de communication à accès multiple à répartition par code, pour recevoir une pluralité de K signaux de données transmis sur un spectre partagé, le récepteur comprenant :
des moyens pour recevoir et échantillonner un signal combiné ayant les K signaux de données transmis sur le spectre partagé produisant des échantillons de signaux combinés ;
des moyens pour produire une matrice de réponse de canal combiné utilisant une convolution de codes et de réponses impulsionnelles des K signaux de données ;
des moyens pour déterminer une transposée du conjugué complexe de la matrice de réponse de canal combiné ;
des moyens pour multiplier la transposée du conjugué complexe de la matrice de réponse de canal combiné par les échantillons de signaux combinés ;
des moyens pour déterminer une matrice de corrélation en utilisant la matrice de réponse de canal combiné ;
**caractérisé en ce que** le récepteur comprend, en outre, les étapes suivantes :
des moyens pour réaliser la transformée de Fourier d'une transposée du conjugué complexe de la matrice de réponse de canal combiné multipliée par les échantillons de signaux combinés ;
des moyens pour déterminer un bloc colonne de la matrice de corrélation, chaque bloc entrée du bloc colonne étant une matrice K par K ;
des moyens pour réaliser une transformée de Fourier de chaque bloc entrée du bloc colonne ;
des moyens pour multiplier une matrice inverse de la transformée de Fourier de chaque bloc entrée du bloc colonne par le résultat de la transformée de Fourier de la transposée du conjugué complexe de la matrice de réponse de canal combiné multipliée par les échantillons de signaux combinés pour produire une transformée de Fourier du vecteur de données ; et
des moyens pour réaliser une transformée de Fourier inverse de la transformée de Fourier du vecteur de données pour produire des données des K signaux de données.

8. Récepteur selon la revendication 7, dans lequel les moyens pour réaliser la transformée de Fourier comprennent des moyens pour multiplier la transposée du conjugué de la matrice de réponse de canal combiné par les échantillons de signaux combinés et pour réaliser la transformée de Fourier d'un résultat de la multiplication de la transposée du conjugué.

9. Récepteur selon la revendication 7, dans lequel le récepteur comprend, en outre, des moyens pour réaliser une décomposition Cholesky des blocs entrée de la matrice diagonale pour déterminer les K signaux de données.

10. Récepteur selon la revendication 7, dans lequel la détermination des données se produit sur une période temporelle de champs de données d'une salve de communication duplex à répartition dans le temps et dans lequel les échantillons de signaux combinés s'étendent au-delà de la période temporelle de champs de données.

11. Récepteur selon la revendication 10, dans lequel les échantillons étendus des échantillons de signaux combinés s'étendent au-delà de la période temporelle de champs de données sur une longueur correspondant à la longueur de la réponse impulsionnelle.

12. Récepteur selon la revendication 10, dans lequel les échantillons de signaux combinés s'étendent au-delà de la période temporelle de champs de données de manière à ce que la longueur des signaux combinés soit une longueur compatible avec la transformée de Fourier rapide de l'algorithme de facteur premier.

13. Récepteur selon l'une quelconque des revendications 7 à 12, comprenant en outre :
un estimateur de canal pour estimer la réponse impulsionnelle des K signaux de données,
et dans lequel lesdits moyens de réception et d'échantillonnage sont mis en oeuvre dans une antenne et un dispositif d'échantillonnage, respectivement ;
lesdits moyens de production, moyens de détermination, moyens de réalisation de transformée de Fourier, moyens de multiplication et lesdits moyens de réalisation de transformée de Fourier inverse sont mis en oeuvre dans un dispositif de détection de données.
